# EUROPÄISCHE PATENTSCHRIFT

(11) **EP 3 885 591 B1**
(45) Veröffentlichungstag und Bekanntmachung des Hinweises auf die Patenterteilung: **26.06.2024**
(21) Anmeldenummer: 21168414.7
(22) Anmeldetag: 11.12.2017
(51) Int. Cl.: F16B 47/00

(54) **BEFESTIGUNGSVORRICHTUNG**
FIXING DEVICE
DISPOSITIF DE FIXATION

(30) Priorität: 22.12.2016 DE 102016125468
(43) Veröffentlichungstag der Anmeldung: 29.09.2021
(62) Teilanmeldung aus: 17811961.6
(73) Patentinhaber: Rheinmetall Landsysteme GmbH, 29345 Südheide (DE)
(72) Erfinder: BÜCHLING, Björn, 34225 Baunatal (DE)
(74) Vertreter: Horn Kleimann Waitzhofer Schmid-Dreyer Patent- und Rechtsanwälte PartG mbB

(56) Entgegenhaltungen:
- WO-A1-2010/057881
- WO-A1-2015/167630
- DE-A1- 19 501 805
- DE-A1-102013 008 432
- DE-U1-202016 005 155
- US-A- 3 532 316
- US-A1- 2015 114 544
- US-A1- 2016 017 596
- US-B1- 8 617 694

## Beschreibung

Die vorliegende Erfindung betrifft eine Befestigungsvorrichtung für den militärischen Bereich.

Bei geschützten Fahrzeugen kann es erforderlich sein, an einer Wandung einer Kabine oder einer Wanne des geschützten Fahrzeugs Rüstsatzgegenstände, wie beispielsweise persönliche Ausrüstung oder dergleichen, zu befestigen. Hierzu können Befestigungspunkte in Form von angeschweißten Blechbiegeteilen oder angeschweißten Gewindebutzen vorgesehen werden. Je nach Ausstattung des geschützten Fahrzeugs kann eine beliebige Anzahl an Befestigungspunkten vorgesehen sein.

Die WO 2010/057881 A1 zeigt einen Punktbefestiger für eine Befestigungsfläche eines Bauteils. Der Punktbefestiger umfasst ein Kontaktelement mit wenigstens einer Kontaktstelle und ein Anschlusselement, wobei das Kontaktelement so ausgebildet ist, dass es an der oder jeder Kontaktstelle mit der Befestigungsfläche in Berührung bringbar ist, wobei das Kontaktelement in einem der oder jeder Kontaktstelle benachbarten inneren Bereich mit einer durch die Befestigungsfläche verschließbaren und dann mit Klebstoff befüllbaren Ausnehmung versehen ist, die wenigstens eine Befüllöffnung und wenigstens eine Überlauföffnung aufweist, wobei die oder jede Kontaktstelle auf einer gedachten Fläche liegt, welche bei gesetztem Punktbefestiger die Befestigungsfläche ist, wobei das Kontaktelement so ausgebildet ist, dass es an der oder jeder Kontaktstelle direkt mit der Befestigungsfläche in eine Linien- und/oder Flächenberührung bringbar ist, so dass die oder jede Kontaktstelle auf der gedachten Fläche eine oder jeweils eine geschlossene Linie oder Fläche bildet und wobei das Kontaktelement in einem die Kontaktstelle(n) umgebenden äußeren Bereich eine Fixierfläche hat, die Abstand von der gedachten Fläche aufweist.

Die US 2015/0114544 A1 zeigt eine Montagestruktur zum Aufkleben auf eine Oberfläche. Die Montagestruktur umfasst eine Basis, eine Außenfläche der Basis und eine Innenfläche der Basis. Eine Klebstoffeinspritzöffnung ist an der Außenseite der Basis vorgesehen, um einen Klebstoff zuzuführen. Ein primärer Klebstoffströmungsweg ist an der Innenseite der Basis vorgesehen. Der primäre Klebstoffströmungsweg steht in Fluidverbindung mit der Klebstoffeinspritzöffnung und lässt den Klebstoff fließen. Ferner ermöglichen mehrere sekundäre Klebstoffströmungswege, die von dem primären Klebstoffströmungsweg ausgehen, dass sich der Klebstoff auf der Innenseite verteilt.

Die DE 195 01 805 A1 beschreibt ein Verfahren zum Fügen von Bauteilen und Baugruppen von Schienenfahrzeugen mittels Kleben. Dabei wird die Anwendung eines Dauerfestigkeit gebenden, jedoch länger aushärtenden Klebers mit der Anwendung eines schnell Handhabungsfestigkeit gebenden Klebers kombiniert. Dabei wird auf ersten Fügeflächen eine schnellklebfähige und eigenformbeständige erste Klebschicht und auf zweiten Fügeflächen eine längerhärtende zweite Klebschicht aufgebracht. Die Bauteile werden dann gefügt, wobei die erste Klebschicht schnell Handhabungsfestigkeit gibt, und einen vorbestimmten Fügeabstand bewahrt, während die zweite Klebschicht den verbliebenen Fügeabstand ausfüllt und nach ihrem Aushärten Dauerfestigkeit gibt.

Vor diesem Hintergrund besteht eine Aufgabe der vorliegenden Erfindung darin, eine verbesserte Befestigungsvorrichtung für den militärischen Bereich zur Verfügung zu stellen.

Demgemäß wird eine Befestigungsvorrichtung für den militärischen Bereich zum Befestigen an einer Oberfläche vorgeschlagen. Die Befestigungsvorrichtung umfasst ein Befestigungselement, das einen Aufnahmeabschnitt für ein Befestigungsmittel aufweist, eine an dem Befestigungselement vorgesehene erste Klebefläche, die einen ersten Klebstoff aufweist, und eine von der ersten Klebefläche getrennte und an dem Befestigungselement vorgesehene zweite Klebefläche, die einen zweiten Klebstoff aufweist, wobei der erste Klebstoff eine größere Dehnbarkeit als der zweite Klebstoff aufweist, wobei die erste Klebefläche mit Hilfe eines Stegabschnitts von der zweiten Klebefläche getrennt ist, und wobei der Stegabschnitt aus einem elastisch verformbaren Material ausgebildet ist.

Dadurch, dass die Befestigungsvorrichtung nicht mit der Oberfläche verschweißt, sondern mit dieser verklebt wird, wird verhindert, dass eine der Oberfläche zugeordnete Wandung durch Schweißpunkte geschwächt wird. Hierdurch kann eine Rissbildung in der Wandung aufgrund von Schweißnähten verhindert werden.

Weiterhin kann die Befestigungsvorrichtung im Vergleich zu einer Schweißlösung auch mit einem geringeren Aufwand nachträglich vorgesehen werden. Hierdurch ist die Befestigungsvorrichtung besonders für Nachrüstungen geeignet. Allerdings kann die Befestigungsvorrichtung auch für die Erstausstattung verwendet werden.

Dadurch, dass zwei unterschiedliche Klebstoffe vorgesehen sind, kann der eine Klebstoff, insbesondere der zweite Klebstoff, quasistatische und dynamische Lasten übertragen, und der andere Klebstoff, insbesondere der erste Klebstoff, kann eine hochdynamische Belastung, insbesondere eine einmalige hochdynamische Belastung, beispielsweise bei einer Ansprengung eines Fahrzeugs mit einer derartigen Befestigungsvorrichtung oder bei einem Crash des Fahrzeugs, aufnehmen. Bevorzugt versagt der zweite Klebstoff bei der hochdynamischen Belastung, so dass die Fixierung der Befestigungsvorrichtung an der Oberfläche nach der hochdynamischen Belastung nur mit Hilfe des ersten Klebstoffs gewährleistet ist. Der erste Klebstoff, der im Vergleich zum zweiten Klebstoff elastisch ist, wird bei der hochdynamischen Belastung stark gedehnt, versagt jedoch nicht. Das heißt, die beiden Klebstoffe erfüllen ihre Funktion getrennt voneinander. Nach der hochdynamischen Belastung wird die Befestigungsvorrichtung bevorzugt ersetzt oder neu verklebt.

Unter Dehnbarkeit ist vorliegend die Eigenschaft der Klebstoffe zu verstehen, unter Krafteinwirkung ihre Form zu verändern. Die Dehnbarkeit gibt dabei an, wie weit der jeweilige Klebstoff in Bezug auf eine dem jeweiligen Klebstoff zugeordnete jeweilige Klebschichtdicke gedehnt werden kann, ohne dass dieser versagt, das heißt, bricht oder reißt. Eine Befestigungsanordnung kann die Befestigungsvorrichtung und die Oberfläche umfassen. Die Oberfläche ist vorzugsweise eine Oberfläche einer Wandung einer Fahrzeugkabine eines geschützten Fahrzeugs oder einer Fahrzeugwanne. Die Befestigungsvorrichtung kann auch als militärische Befestigungsvorrichtung bezeichnet werden.

Darunter, dass die erste Klebefläche von der zweiten Klebefläche getrennt ist, ist zu verstehen, dass der erste Klebstoff nicht mit dem zweiten Klebstoff in Kontakt kommt. Hierzu ist zwischen der ersten Klebefläche und der zweiten Klebefläche ein Stegabschnitt vorgesehen.

Das Befestigungselement kann beispielsweise aus einer Aluminiumlegierung oder aus einer Stahllegierung, beispielsweise aus Edelstahl, gefertigt sein. Vorzugsweise ist das Befestigungselement zylinderförmig mit einer kreisförmigen Querschnittsgeometrie. Das Befestigungselement kann im Querschnitt allerdings auch oval, dreieckig, rechteckig, quadratisch, dreieckig, mehreckig, L-förmig oder dergleichen sein. Das heißt, das Befestigungselement kann im Querschnitt jede beliebige Geometrie aufweisen. Hierdurch kann die Befestigungsvorrichtung an beliebige Anwendungsfälle angepasst werden.

Das Befestigungselement ist im Vergleich zu dem ersten Klebstoff und dem zweiten Klebstoff sehr steif, so dass bei einer Kraftaufbringung auf das Befestigungselement die beiden Klebstoffe nicht linien- oder punktförmig, sondern flächig belastet werden. Hierdurch wird eine lokale Überlastung der Klebstoffe, die Ausgangspunkt von Rissen sein kann, verhindert. Dies kann dadurch erreicht werden, dass das Befestigungselement im Vergleich zu den Klebschichtdicken der Klebstoffe eine große Dicke aufweist.

Das Befestigungselement kann auch noch einen sich von dem ersten Klebstoff und dem zweiten Klebstoff unterscheidenden dritten Klebstoff aufweisen, der dazu eingerichtet ist, das Befestigungselement solange an der Oberfläche zu fixieren, bis der erste Klebstoff und/oder der zweite Klebstoff ausgehärtet sind oder abgebunden haben. Der dritte Klebstoff kann ein schnell haftender Klebstoff, wie beispielsweise ein Haftkleber oder ein Cyanacrylat, sein. Für den dritten Klebstoff kann an dem Befestigungselement eine dritte Klebefläche vorgesehen sein. Der dritte Klebstoff kann auch an einem von dem Befestigungselement trennbaren Fixierrahmen vorgesehen sein. Der Fixierrahmen kann beispielsweise ringförmig ausgebildet sein und zur Montage der Befestigungsvorrichtung über das Befestigungselement geschoben werden.

Der Aufnahmeabschnitt kann eine in dem Befestigungselement vorgesehene Bohrung mit einem Gewinde sein, in das das Befestigungsmittel einschraubbar ist. Das Befestigungsmittel kann ein Gewindebolzen oder eine Schraube sein. Alternativ kann der Aufnahmeabschnitt ein sich aus dem Befestigungselement heraus erstreckender Bolzen, beispielsweise mit einem Gewinde, sein. Das Befestigungsmittel kann dann beispielsweise eine Mutter sein.

Gemäß einer Ausführungsform weist der erste Klebstoff eine erste Klebschichtdicke und der zweite Klebstoff eine zweite Klebschichtdicke auf, die kleiner als die, größer als die oder gleich der ersten Klebschichtdicke ist.

Bevorzugt ist die erste Klebschichtdicke größer als die zweite Klebschichtdicke. Die Klebschichtdicken können beispielsweise jeweils 1 bis 3 Millimeter betragen. Die Klebschichtdicken können beispielsweise durch auf die erste Klebefläche oder die zweite Klebefläche auflegbare und aufklebbare Scheiben eingestellt werden. Die unterschiedliche Dehnbarkeit der beiden Klebstoffe kann auch durch unterschiedliche Klebschichtdicken eingestellt werden. Das heißt, der erste Klebstoff kann chemisch identisch mit dem zweiten Klebstoff sein. Die unterschiedliche Dehnbarkeit wird dann über unterschiedliche Klebschichtdicken eingestellt. Vorzugsweise unterscheiden sich jedoch der erste Klebstoff und der zweite Klebstoff chemisch voneinander.

Gemäß einer weiteren Ausführungsform ist der erste Klebstoff um bis zu 50%, bevorzugt um bis zu 60%, weiter bevorzugt um bis zu 70%, weiter bevorzugt um bis zu 80%, weiter bevorzugt um bis zu 90%, weiter bevorzugt um bis zu 100%, der ersten Klebschichtdicke dehnbar.

Das heißt, der erste Klebstoff versagt erst dann, wenn dieser um bis zu 50% bis 100% der ersten Klebschichtdicke gedehnt ist. Weiterhin kann der erste Klebstoff auch erst bei Dehnungen von über 100% der ersten Klebschichtdicke, beispielsweise bei 150%, 200% oder 300% der ersten Klebschichtdicke, versagen. Hierdurch können besonders hohe Dehnraten von bis zu 10³ s⁻¹ erzielt werden, ohne dass der erste Klebstoff versagt.

Gemäß einer weiteren Ausführungsform ist der zweite Klebstoff um bis zu 10%, bevorzugt um bis zu 8%, weiter bevorzugt um bis zu 6%, weiter bevorzugt um bis zu 4%, weiter bevorzugt um bis zu 2%, der zweiten Klebschichtdicke dehnbar.

Der zweite Klebstoff kann auch um bis zu mehr als 10% oder um bis zu weniger als 2% der zweiten Klebschichtdicke dehnbar sein. Wichtig ist hierbei jedoch, dass die Klebstoffe eine unterschiedliche Dehnbarkeit aufweisen. Insbesondere kann der erste Klebstoff eine größere Dehnbarkeit als der zweite Klebstoff aufweisen. Umgekehrt kann auch der zweite Klebstoff eine größere Dehnbarkeit als der erste Klebstoff aufweisen.

Gemäß einer weiteren Ausführungsform ist der erste Klebstoff ein Polyurethan und der zweite Klebstoff ein Epoxidharz.

Vorzugsweise sind der erste Klebstoff und der zweite Klebstoff jeweils mehrkomponentige Klebstoffe, die vor der Applikation an dem Befestigungselement gemischt werden. Beispielsweise können die unterschiedliche Dehnbarkeit des ersten Klebstoffs und des zweiten Klebstoffs auch dadurch erreicht werden, dass mit einem Mehrkomponentensystem mit Hilfe unterschiedlicher Mischverhältnisse Klebstoffe unterschiedlicher Dehnbarkeit hergestellt werden.

Gemäß einer weiteren Ausführungsform sind die erste Klebefläche und/oder die zweite Klebefläche spiegelsymmetrisch zu einer ersten Symmetrieebene und/oder zu einer zweiten Symmetrieebene des Befestigungselements aufgebaut.

Vorzugsweise ist die erste Symmetrieebene senkrecht zu der zweiten Symmetrieebene angeordnet. Eine Schnittlinie der ersten Symmetrieebene und der zweiten Symmetrieebene bildet eine Mittel- oder Symmetrieachse des Befestigungselements. Insbesondere sind die erste Klebefläche und/oder die zweite Klebefläche punktsymmetrisch aufgebaut.

Gemäß einer weiteren Ausführungsform ist die erste Klebefläche zumindest abschnittsweise innerhalb der zweiten Klebefläche angeordnet.

Vorzugsweise läuft die zweite Klebefläche vollständig um die erste Klebefläche um, so dass die erste Klebefläche vollständig innerhalb der zweiten Klebefläche angeordnet ist. Alternativ kann die erste Klebefläche auch zumindest teilweise nicht von der zweiten Klebefläche umgeben sein, so dass die erste Klebefläche durch die zweite Klebefläche hindurchgeführt ist.

Gemäß einer weiteren Ausführungsform sind die erste Klebefläche und die zweite Klebefläche spiralförmig ineinander verschlungen.

Zwischen der ersten Klebefläche und der zweiten Klebefläche ist dann ein spiralförmig gewundener Stegabschnitt vorgesehen. Die erste Klebefläche ist mit Hilfe eines Stegabschnitts von der zweiten Klebefläche getrennt.

Der Stegabschnitt kann materialeinstückig mit dem Befestigungselement ausgebildet sein. Alternativ kann der Stegabschnitt auch ein von dem Befestigungselement getrenntes Bauteil sein, das insbesondere auch aus einem anderen Material als das Befestigungselement ausgebildet sein kann. Der Stegabschnitt ist aus einem elastisch verformbaren Material ausgebildet. Hierdurch kann eine besonders gute Abdichtung zwischen der ersten Klebefläche und der zweiten Klebefläche erzielt werden. Der Stegabschnitt kann beispielsweise mit dem Befestigungselement verklebt oder auf sonstige Art und Weise lösbar oder unlösbar mit dem Befestigungselement verbunden sein.

Gemäß einer weiteren Ausführungsform weist der Stegabschnitt eine Stirnseite auf, die zum Einstellen einer ersten Klebschichtdicke des ersten Klebstoffs und/oder einer zweiten Klebschichtdicke des zweiten Klebstoffs die Oberfläche kontaktiert.

Die erste Klebschichtdicke ist insbesondere definiert als ein Abstand von der Stirnseite des Stegabschnitts zu der ersten Klebefläche. Die zweite Klebschichtdicke ist insbesondere definiert als ein Abstand von der Stirnseite des Stegabschnitts zu der zweiten Klebefläche. Durch die Höhe des Stegabschnitts beziehungsweise durch die Tiefe der ersten Klebefläche gegenüber der Stirnseite des Stegabschnitts und der Tiefe der zweiten Klebefläche bezüglich der Stirnseite des Stegabschnitts können die erste Klebschichtdicke und die zweite Klebschichtdicke eingestellt sein. An der Stirnseite des Stegabschnitts kann weiterhin eine optionale Dichteinrichtung, beispielsweise ein O-Ring, vorgesehen sein, um die erste Klebefläche gegenüber der zweiten Klebefläche abzudichten. An der Stirnseite kann auch der zuvor erwähnte dritte Klebstoff vorgesehen sein, mit dessen Hilfe das Befestigungselement an der Oberfläche fixierbar ist, bis der erste Klebstoff und/oder der zweite Klebstoff ausgehärtet sind. Der dritte Klebstoff kann beispielsweise ein mit einer Schutzfolie geschützter Haftklebstoff oder ein Cyanacrylat sein.

Gemäß einer weiteren Ausführungsform ist zumindest ein Kanal vorgesehen, der von der ersten Klebefläche durch die zweite Klebefläche hindurch- oder an dieser vorbei führt.

Durch den Kanal kann beim Positionieren der Befestigungsvorrichtung an der Oberfläche der erste Klebstoff austreten. Hierdurch kann eine optische Qualitätskontrolle durchgeführt werden, da dann, wenn der erste Klebstoff aus dem Kanal austritt, sichergestellt ist, dass die erste Klebefläche und ein entsprechender Teil der Oberfläche der Wandung von dem ersten Klebstoff vollständig benetzt sind. Es kann eine beliebige Anzahl an Kanälen vorgesehen sein. Die Kanäle sind vorzugsweise spiegelsymmetrisch zu der ersten Symmetrieebene und/oder der zweiten Symmetrieebene angeordnet.

Gemäß einer weiteren Ausführungsform weist der zumindest eine Kanal Seitenwände auf, die so angeordnet sind, dass sich der Kanal in Richtung einer Symmetrieachse des Befestigungselements verengt.

Umgekehrt erweitert sich der zumindest eine Kanal ausgehend von der Symmetrieachse nach außen. Die Seitenwände können Teil des Stegabschnitts sein. Die Seitenwände können auch parallel zueinander angeordnet sein oder bogenförmig gekrümmt sein.

Gemäß einer weiteren Ausführungsform mündet der zumindest eine Kanal in eine Bohrung des Aufnahmeabschnitts.

Insbesondere mündet der zumindest eine Kanal in einen Auslauf der Bohrung ein. Hierdurch kann auf die Durchführung des Kanals durch die zweite Klebefläche verzichtet werden. Dadurch können sowohl die erste Klebefläche als auch die zweite Klebefläche spiegelsymmetrisch sowohl zu der ersten Symmetrieebene als auch zu der zweiten Symmetrieebene aufgebaut werden. Hierdurch kann eine besonders gute Kraftverteilung im Betrieb der Befestigungsvorrichtung erreicht werden. Der zumindest eine Kanal kann auch eine sich in Richtung der Bohrung des Aufnahmeabschnitts erstreckende erste Bohrung und eine senkrecht zu der ersten Bohrung angeordnete zweite Bohrung aufweisen, die an der zweiten Klebefläche vorbeiführt. Hierdurch kann eine Verschmutzung des Aufnahmeabschnitts mit dem ersten Klebstoff verhindert werden.

Gemäß einer weiteren Ausführungsform ist die erste Klebefläche in eine Vielzahl voneinander getrennter erster Flächenabschnitte und die zweite Klebefläche ist in eine Vielzahl voneinander getrennter zweiter Flächenabschnitte unterteilt, wobei die ersten Flächenabschnitte und die zweiten Flächenabschnitte zeilenförmig oder matrixförmig angeordnet sind.

Die ersten Flächenabschnitte und die zweiten Flächenabschnitte sind jeweils durch Stegabschnitte voneinander getrennt. Darunter, dass die ersten Flächenabschnitte und die zweiten Flächenabschnitte zeilenförmig angeordnet sind, ist zu verstehen, dass zwischen zwei ersten Flächenabschnitten jeweils ein zweiter Flächenabschnitt und umgekehrt angeordnet ist. Darunter, dass die ersten Flächenabschnitte und die zweiten Flächenabschnitte matrixförmig angeordnet sind, ist zu verstehen, dass die ersten Flächenabschnitte und die zweiten Flächenabschnitte nicht nur zeilenförmig, sondern auch spaltenförmig angeordnet sind. Hierdurch ergibt sich eine schachbrettartige Aufteilung der ersten Flächenabschnitte und der zweiten Flächenabschnitte.

Gemäß einer weiteren Ausführungsform umfasst das Befestigungselement einen ersten Befestigungsabschnitt, der die erste Klebefläche mit dem ersten Klebstoff aufweist, und einen von dem ersten Befestigungsabschnitt getrennten zweiten Befestigungsabschnitt, der die zweite Klebefläche mit dem zweiten Klebstoff aufweist.

Der erste Befestigungsabschnitt und der zweite Befestigungsabschnitt sind vorzugsweise als voneinander getrennte Bauteile ausgebildet. Der erste Befestigungsabschnitt und der zweite Befestigungsabschnitt können einen gemeinsamen Aufnahmeabschnitt für das Befestigungsmittel aufweisen.

Weitere vorteilhafte Ausgestaltungen und Aspekte der Befestigungsvorrichtung sind Gegenstand der Unteransprüche sowie der im Folgenden beschriebenen Ausführungsbeispiele der Befestigungsvorrichtung. Im Weiteren wird die Befestigungsvorrichtung anhand von bevorzugten Ausführungsformen unter Bezugnahme auf die beigelegten Figuren näher erläutert.

Nur Figuren 1-13 zeigen erfindungsgemäße Ausführungsformen.
Fig. 1 zeigt eine schematische Seitenansicht eines geschützten Fahrzeugs;
Fig. 2 zeigt eine schematische Schnittansicht einer Ausführungsform einer Befestigungsvorrichtung für das geschützte Fahrzeug gemäß Fig. 1;
Fig. 3 zeigt eine schematische Ansicht der Befestigungsvorrichtung gemäß Fig. 2;
Fig. 4 zeigt eine schematische Ansicht einer weiteren Ausführungsform einer Befestigungsvorrichtung für das geschützte Fahrzeug gemäß Fig. 1;
Fig. 5 zeigt eine schematische Ansicht einer weiteren Ausführungsform einer Befestigungsvorrichtung für das geschützte Fahrzeug gemäß Fig. 1;
Fig. 6 zeigt eine schematische Ansicht einer weiteren Ausführungsform einer Befestigungsvorrichtung für das geschützte Fahrzeug gemäß Fig. 1;
Fig. 7 zeigt eine schematische Ansicht einer weiteren Ausführungsform einer Befestigungsvorrichtung für das geschützte Fahrzeug gemäß Fig. 1;
Fig. 8 zeigt eine schematische Ansicht einer weiteren Ausführungsform einer Befestigungsvorrichtung für das geschützte Fahrzeug gemäß Fig. 1;
Fig. 9 zeigt eine schematische Ansicht einer weiteren Ausführungsform einer Befestigungsvorrichtung für das geschützte Fahrzeug gemäß Fig. 1;
Fig. 10 zeigt eine schematische Ansicht einer weiteren Ausführungsform einer Befestigungsvorrichtung für das geschützte Fahrzeug gemäß Fig. 1;
Fig. 11 zeigt eine schematische Schnittansicht einer weiteren Ausführungsform einer Befestigungsvorrichtung für das geschützte Fahrzeug gemäß Fig. 1;
Fig. 12 zeigt eine schematische Ansicht der Befestigungsvorrichtung gemäß Fig. 11;
Fig. 13 zeigt eine schematische Schnittansicht einer weiteren Ausführungsform einer Befestigungsvorrichtung;
Fig. 14 zeigt eine schematische Schnittansicht einer weiteren Ausführungsform einer Befestigungsvorrichtung; und
Fig. 15 zeigt Ansicht XV gemäß Fig. 14.

In den Figuren sind gleiche oder funktionsgleiche Elemente mit denselben Bezugszeichen versehen worden, sofern nichts anderes angegeben ist.

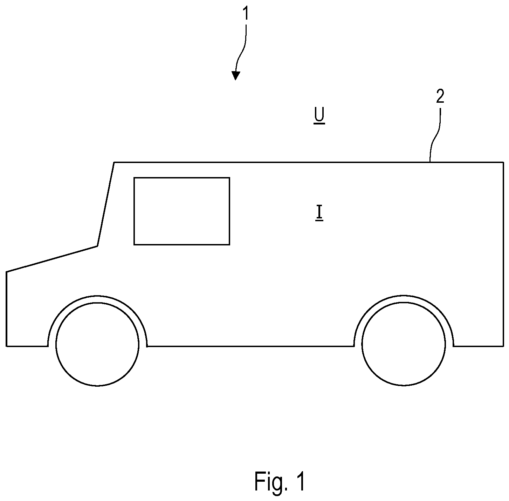

Die Fig. 1 zeigt eine schematische Seitenansicht einer Ausführungsform eines geschützten Fahrzeugs 1. Das Fahrzeug 1 kann ein militärisches Fahrzeug sein. Das Fahrzeug 1 kann ein Landfahrzeug, insbesondere ein Radfahrzeug oder ein Kettenfahrzeug, sein. Das Fahrzeug 1 kann weiterhin ein Schienenfahrzeug, ein Wasserfahrzeug oder ein Luftfahrzeug sein. Das Fahrzeug 1 umfasst eine Kabine 2, welche einen Innenraum I des Fahrzeugs 1 umschließt und von einer Umgebung U des Fahrzeugs 1 abtrennt.

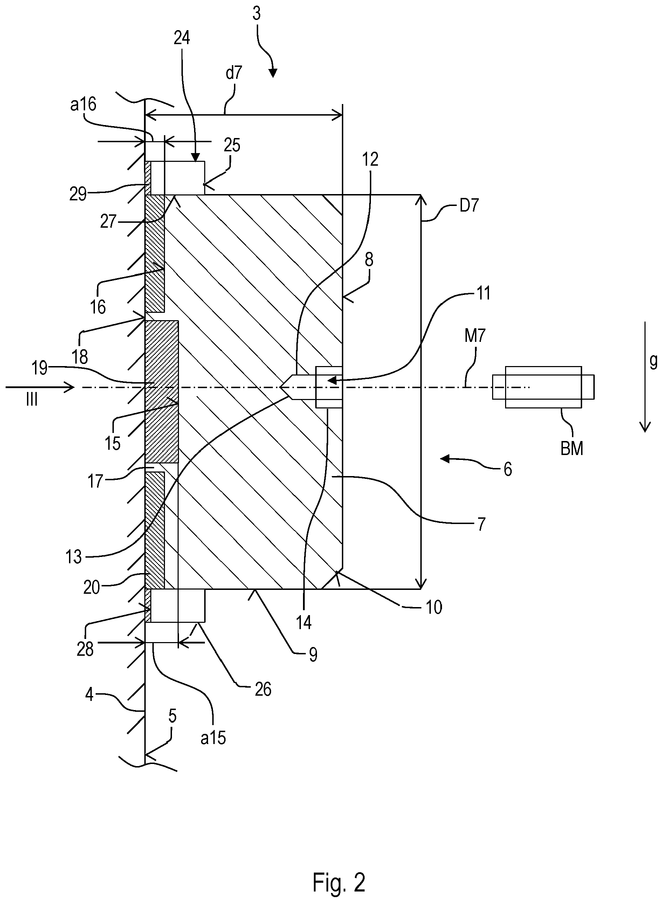

Die Fig. 2 zeigt eine schematische Schnittansicht einer Ausführungsform einer Befestigungsanordnung 3 für das Fahrzeug 1. Mit Hilfe der Befestigungsanordnung 3 können beispielsweise Rüstsatzgegenstände oder dergleichen in dem Innenraum I der Kabine 2 an einer Wandung 4 des Fahrzeugs 1 befestigt werden. Die Befestigungsanordnung 3 kann die Wandung 4 umfassen. Die Wandung 4 kann beispielsweise Teil der Kabine 2 oder Teil einer Wanne des Fahrzeugs 1 sein. Die Wandung 4 weist eine dem Innenraum I zugewandte Oberfläche 5 auf. Die Oberfläche 5 kann allerdings auch dem Innenraum I abgewandt und der Umgebung U des Fahrzeugs 1 zugewandt sein. Das heißt, die Befestigungsanordnung 3 kann auch außenseitig an dem Fahrzeug 1 vorgesehen sein.

Die Befestigungsanordnung 3 umfasst weiterhin eine Befestigungsvorrichtung 6. Die Befestigungsvorrichtung 6 kann als Butzen, insbesondere als Gewindebutzen, bezeichnet werden. Die Befestigungsvorrichtung 6 weist ein Befestigungselement 7 auf. Das Befestigungselement 7 ist vorzugsweise rotationssymmetrisch zu einer Mittel- oder Symmetrieachse M7 ausgebildet. Das Befestigungselement 7 kann eine zylinderförmige Geometrie mit einem kreisförmigen Querschnitt aufweisen. Das Befestigungselement 7 weist eine der Oberfläche 5 abgewandte Rückseite 8 und eine umlaufende zylinderförmige Außenfläche 9 auf. Die Außenfläche 9 geht über eine umlaufende Fase 10 in die Rückseite 8 über.

Das Befestigungselement 7 ist beispielsweise aus einer Aluminium- oder einer Stahllegierung, insbesondere aus Edelstahl, gefertigt. Alternativ kann das Befestigungselement 7 auch aus einem Kunststoffmaterial gefertigt sein. Das Befestigungselement 7 weist beispielsweise eine Dicke d7 sowie einen Durchmesser D7 auf. Die Dicke d7 beträgt beispielsweise ein Drittel des Durchmessers D7.

Das Befestigungselement 7 umfasst weiterhin einen Aufnahmeabschnitt 11 für ein Befestigungsmittel BM. Das Befestigungsmittel BM kann beispielsweise ein Gewindebolzen oder eine Schraube sein. Der Aufnahmeabschnitt 11 umfasst eine vorzugsweise rotationssymmetrisch zu der Symmetrieachse M7 angeordnete Bohrung 12 mit einem konischen Auslauf 13. In der Bohrung 12 ist ein Gewinde 14, insbesondere ein Innengewinde, vorgesehen. Alternativ kann der Aufnahmeabschnitt 11 auch als aus dem Befestigungselement 7 herausragender Bolzen ausgebildet sein.

Der Oberfläche 5 zugewandt umfasst das Befestigungselement 7 eine erste Klebefläche 15 sowie eine von der ersten Klebefläche 15 getrennte zweite Klebefläche 16. Vorzugsweise ist die erste Klebefläche 15 kleiner als die zweite Klebefläche 16. Umgekehrt kann auch die zweite Klebefläche 16 kleiner als die erste Klebefläche 15 sein oder die beiden Klebeflächen 15, 16 sind gleich groß.

Erfindungsgemäß sind die erste Klebefläche 15 und die zweite Klebefläche 16, wie in der Fig. 2 gezeigt, mit Hilfe eines Stegabschnitts 17 voneinander getrennt.

Der Stegabschnitt 17 ist vorzugsweise materialeinstückig mit dem Befestigungselement 7 ausgebildet. Das heißt, das Befestigungselement 7 und der Stegabschnitt 17 bilden ein Bauteil. Alternativ kann der Stegabschnitt 17 auch ein von dem Befestigungselement 7 getrenntes Bauteil sein. Beispielsweise kann der Stegabschnitt 17 dann aus einem anderen Material als das Befestigungselement 7 gefertigt sein, erfindungsgemäß ist der Stegabschnitt 17 aus einem elastisch verformbaren Material gefertigt. Der Stegabschnitt 17 kann dann eine Dichtfunktion erfüllen.

Eine Stirnseite 18 des Stegabschnitts 17 ist um eine Klebschichtdicke a15 von der ersten Klebefläche 15 beabstandet angeordnet. Weiterhin ist die zweite Klebefläche 16 um eine Klebschichtdicke a16 von der Stirnseite 18 beabstandet angeordnet. Der Stegabschnitt 17 kann somit zur Definition der Klebschichtdicken a15, a16 dienen. Die Klebschichtdicken a15, a16 können gleich groß oder, wie in der Fig. 2 gezeigt, unterschiedlich groß sein. Beispielsweise ist die erste Klebschichtdicke a15 größer als die zweite Klebschichtdicke a16. Umgekehrt kann auch die zweite Klebschichtdicke a16 größer als die erste Klebschichtdicke a15 sein. Die Klebschichtdicken a15, a16 können beispielsweise durch auf die Klebeflächen 15, 16 aufgelegte Scheiben eingestellt werden. Alternativ können die Klebschichtdicken a15, a16 durch eine spanende Bearbeitung des Befestigungselements 7 eingestellt werden.

An der ersten Klebefläche 15 ist ein erster Klebstoff 19 zum Verbinden des Befestigungselements 7 mit der Oberfläche 5 vorgesehen. Der zweiten Klebefläche 16 ist ein zweiter Klebstoff 20 zugeordnet. Umgekehrt kann auch der erste Klebstoff 19 der zweiten Klebefläche 16 und der zweite Klebstoff 20 der ersten Klebefläche 15 zugeordnet sein. Hier unterscheiden sich die beiden Klebstoffe 19, 20 jedoch chemisch voneinander. Erfindungsgemäß weist der erste Klebstoff 19 eine größere Dehnbarkeit als der zweite Klebstoff 20 auf. Umgekehrt kann auch der zweite Klebstoff 20 eine größere Dehnbarkeit als der erste Klebstoff 19 aufweisen. Beispielsweise ist der erste Klebstoff 19 ein Polyurethan (PU) und der zweite Klebstoff 20 ist ein Epoxid. Insbesondere sind die beiden Klebstoffe 19, 20 Mehrkomponentenklebstoffe.

Unter Dehnbarkeit ist die Eigenschaft der Klebstoffe 19, 20 zu verstehen, unter Krafteinwirkung ihre Form zu verändern. Die Dehnbarkeit gibt dabei an, wie weit der jeweilige Klebstoff 19, 20 in Bezug auf seine Klebschichtdicke a15, a16 verlängert werden kann, ohne dass er bricht oder reißt. Der erste Klebstoff 19 ist beispielsweise um bis zu 50%, bevorzugt um bis zu 60%, weiter bevorzugt um bis zu 70%, weiter bevorzugt um bis zu 80%, weiter bevorzugt um bis zu 90%, weiter bevorzugt um bis zu 100% der ersten Klebschichtdicke a15 dehnbar bevor dieser versagt, das heißt, bis der erste Klebstoff 19 bricht oder reißt. Weiterhin kann der erste Klebstoff 19 auch erst bei Dehnungen von über 100% der ersten Klebschichtdicke a15, beispielsweise bei 150%, 200% oder 300% der ersten Klebschichtdicke, versagen. Hierdurch können besonders hohe Dehnraten von bis zu 10³ s⁻¹ erzielt werden.

Im Vergleich hierzu ist der zweite Klebstoff 20 beispielsweise nur um bis zu 10%, bevorzugt um bis zu 8%, weiter bevorzugt um bis zu 6%, weiter bevorzugt um bis zu 4%, weiter bevorzugt um bis zu 2% der zweiten Klebschichtdicke a16 dehnbar. Der zweite Klebstoff 20 kann allerdings auch um bis zu mehr als 10% oder um bis zu weniger als 2% der zweiten Klebschichtdicke a16 dehnbar sein bevor dieser versagt.

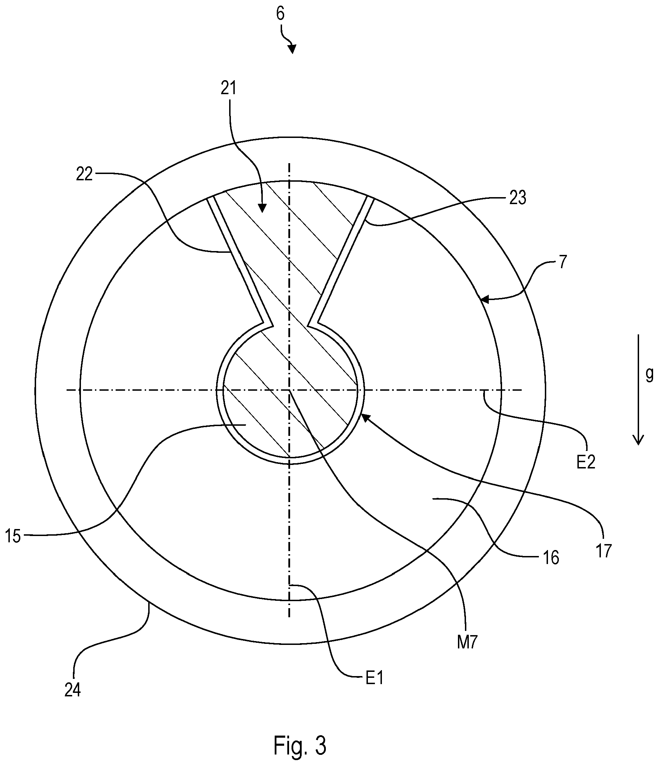

Die Fig. 3 zeigt eine Ansicht der Befestigungsvorrichtung 6 in der Blickrichtung III gemäß der Fig. 2. In der Fig. 3 sind die Klebstoffe 19, 20 nicht dargestellt. Die erste Klebefläche 15 ist in der Fig. 3 schraffiert dargestellt und die zweite Klebefläche 16 ist unschraffiert dargestellt. Wie die Fig. 3 zeigt, ist die erste Klebefläche 15 zumindest abschnittsweise von der zweiten Klebefläche 16 umgeben. Der Stegabschnitt 17 ist vorzugsweise kreisförmig ausgebildet und umfasst einen Kanal 21, der durch die zweite Klebefläche 16 hindurchführt. Der Kanal 21 weist zwei Seitenwände 22, 23 auf, die vorzugsweise so geneigt sind, dass sich der Kanal 21 in Richtung auf die Symmetrieachse M7 hin verjüngt. Die Seitenwände 22, 23 sind Teil des Stegabschnitts 17. Die Seitenwände 22, 23 können auch parallel zueinander verlaufen. Der Kanal 21 kann beliebig zu einer Schwerkraftrichtung g orientiert sein. Das heißt, der Kanal 21 kann in der Orientierung der Fig. 3 nach oben, nach unten oder zur Seite weisen.

Vorzugsweise sind sowohl die erste Klebefläche 15 als auch die zweite Klebefläche 16 symmetrisch, insbesondere spiegelsymmetrisch, zu einer ersten Symmetrieebene E1 ausgebildet. Die erste Klebefläche 15 und die zweite Klebefläche 16 können auch, abweichend von der Darstellung in der Fig. 3, symmetrisch, insbesondere spiegelsymmetrisch, zu einer zweiten Symmetrieebene E2 ausgebildet sein. Die zweite Symmetrieebene E2 ist senkrecht zu der ersten Symmetrieebene E1 angeordnet. Die Symmetrieachse M7 bildet eine Schnittlinie der beiden Symmetrieebenen E1, E2.

Die Funktionalität der Befestigungsvorrichtung 6 wird nachfolgend erläutert. Zum Befestigen der Befestigungsvorrichtung 6 an der Oberfläche 5 wird zunächst der erste Klebstoff 19 auf die erste Klebefläche 15 appliziert. Anschließend wird der zweite Klebstoff 20 auf die zweite Klebefläche 16 appliziert. Das Applizieren der Klebstoffe 19, 20 kann auch in umgekehrter Reihenfolge oder gleichzeitig erfolgen.

Die Befestigungsvorrichtung 6 wird anschließend in der gewünschten Position an der Oberfläche 5 positioniert und bevorzugt bis zum Aushärten zumindest eines der Klebstoffe 19, 20 fixiert. Hierzu kann ein optionaler Fixierrahmen 24 vorgesehen sein. Der Fixierrahmen 24 ist beispielsweise als das Befestigungselement 7 umlaufender Ring ausgebildet, in dem das Befestigungselement 7 aufgenommen werden kann. Der Fixierrahmen 24 kann allerdings auch jede andere beliebige Geometrie aufweisen. Der Fixierrahmen 24 umfasst, wie in der Fig. 2 gezeigt, eine von der Oberfläche 5 weg orientierte Rückseite 25, eine zylindrische Außenfläche 26 sowie eine zylindrische Innenfläche 27, an der die Außenfläche 9 des Befestigungselements 7 anliegt.

Der Fixierrahmen 24 umfasst weiterhin eine Stirnseite 28, die der Oberfläche 5 zugewandt ist. An der Stirnseite 28 ist vorzugsweise ein dritter Klebstoff 29 vorgesehen, um den Fixierrahmen 24 an der Oberfläche 5 zu fixieren. Der dritte Klebstoff 29 kann beispielsweise ein mit einer Schutzfolie geschützter Haftklebstoff oder ein schnell aushärtender Klebstoff, wie beispielsweise ein Cyanacrylat, sein. Der Fixierrahmen 24 kann vor dem Befestigungselement 7 an der Oberfläche 5 fixiert werden oder der Fixierrahmen 24 kann nach dem Positionieren des Befestigungselements 7 an der Oberfläche 5 über dieses übergeschoben werden. Alternativ kann der dritte Klebstoff 29 auch direkt an dem Befestigungselement 7 vorgesehen sein. Beispielsweise kann der dritte Klebstoff 29 an der Stirnseite 18 des Stegabschnitts 17 oder an einer zusätzlichen an dem Befestigungselement 7 vorgesehenen Klebefläche vorgesehen sein.

Bei dem Andrücken des Befestigungselements 7 gegen die Oberfläche 5 wird der erste Klebstoff 19 durch den Kanal 21 hinausgedrückt, so dass durch eine Betrachtung des Kanals 21 sichergestellt werden kann, dass der erste Klebstoff 19 auf der gesamten ersten Klebefläche 15 appliziert und in Kontakt mit der Oberfläche 5 ist. Der Kanal 21 dient so der Kontrolle des Klebergebnisses. Mit Hilfe des Stegabschnitts 17 kann dabei verhindert werden, dass der erste Klebstoff 19 mit dem zweiten Klebstoff 20 in Kontakt gerät oder sich mit diesem vermischt. Hierdurch wird eine unerwünschte negative Beeinflussung des Klebeergebnisses aufgrund eines Vermischens der Klebstoffe 19, 20 vermieden.

Im Einsatz der Befestigungsvorrichtung 6, das heißt, nach dem vollständigen Abbinden oder Aushärten sowohl des ersten Klebstoffs 19 als auch des zweiten Klebstoffs 20, übernimmt der weniger dehnbare zweite Klebstoff 20 quasistatische und dynamische Lasten, insbesondere Lasten, die in der Schwerkraftrichtung g wirken, die im Betrieb des Fahrzeugs 1, beispielsweise bei einer Geländefahrt oder durch das Eigengewicht von an der Befestigungsvorrichtung 6 befestigten Rüstsatzgegenständen, auf diese wirkt.

Bei einer hochdynamischen Belastung, beispielsweise bei einer Ansprengung des Fahrzeugs 1 oder einem Crash, kann der zweite Klebstoff 20 aufgrund seiner im Vergleich zu dem ersten Klebstoff 19 geringeren Dehnbarkeit versagen und brechen oder reißen. Das Versagen des zweiten Klebstoffs 20 ist dabei gewollt. Ein Lösen der Befestigungsvorrichtung 6 von der Oberfläche 5 wird jedoch durch den ersten Klebstoff 19, der eine hohe Dehnbarkeit im Vergleich zu dem zweiten Klebstoff 20 aufweist, verhindert. Nach der hochdynamischen Belastung, bei der der zweite Klebstoff 20 versagt hat, kann die Befestigungsvorrichtung 6 ausgetauscht oder erneut verklebt werden.

Das Befestigungselement 7 kann abweichend von der in der Fig. 3 dargestellten kreisrunden Geometrie auch eine ovale Geometrie aufweisen, damit in der Schwerkraftrichtung g wirkende statische und dynamische Lasten besser aufgenommen werden können. Alternativ kann das Befestigungselement 7 auch eine vieleckige Geometrie, beispielsweise eine dreieckige, eine quadratische oder eine rechteckige Geometrie, aufweisen. Weiterhin kann das Befestigungselement 7 auch eine L-förmige Geometrie aufweisen.

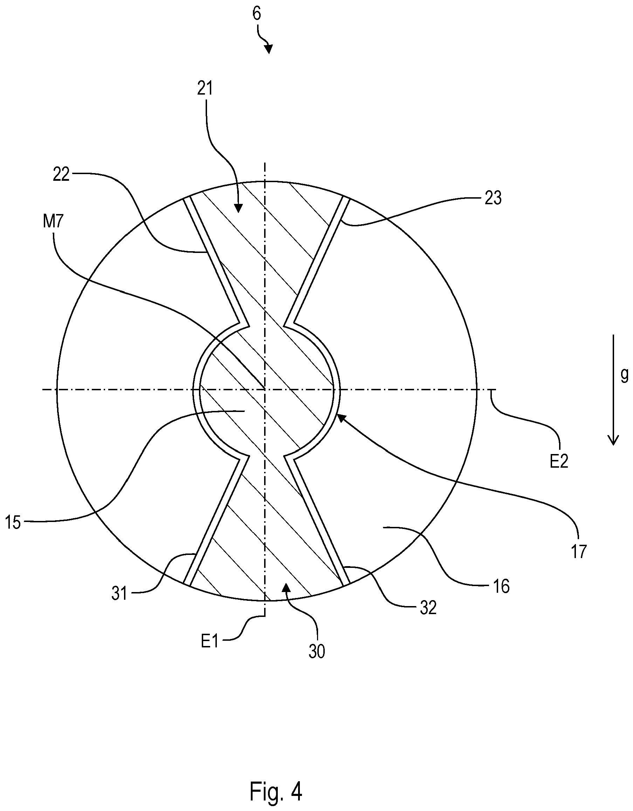

Die Fig. 4 zeigt eine Ansicht einer weiteren Ausführungsform einer Befestigungsvorrichtung 6. Die Befestigungsvorrichtung 6 gemäß der Fig. 4 unterscheidet sich von der Befestigungsvorrichtung 6 gemäß den Fig. 2 und 3 nur dadurch, dass nicht nur ein Kanal 21, sondern zwei Kanäle 21, 30 vorgesehen sind, die von der ersten Klebefläche 15 durch die zweite Klebefläche 16 hindurchführen. Insbesondere sind ein erster Kanal 21 sowie ein zweiter Kanal 30 vorgesehen. Der zweite Kanal 30 weist wie der erste Kanal 21 zwei Seitenwände 31, 32 auf, die so geneigt sind, dass sich der zweite Kanal 30 in Richtung der Symmetrieachse M7 verjüngt. Bei dieser Ausführungsform der Befestigungsvorrichtung 6 gemäß der Fig. 4 sind die beiden Klebeflächen 15, 16 nicht nur symmetrisch zu der ersten Symmetrieebene E1 sondern auch symmetrisch zu der zweiten Symmetrieebene E2 angeordnet. Hierdurch kann eine besonders gleichmäßige Kraftverteilung erzielt werden. Die Kanäle 21, 30 können beliebig zu der Schwerkraftrichtung g orientiert sein.

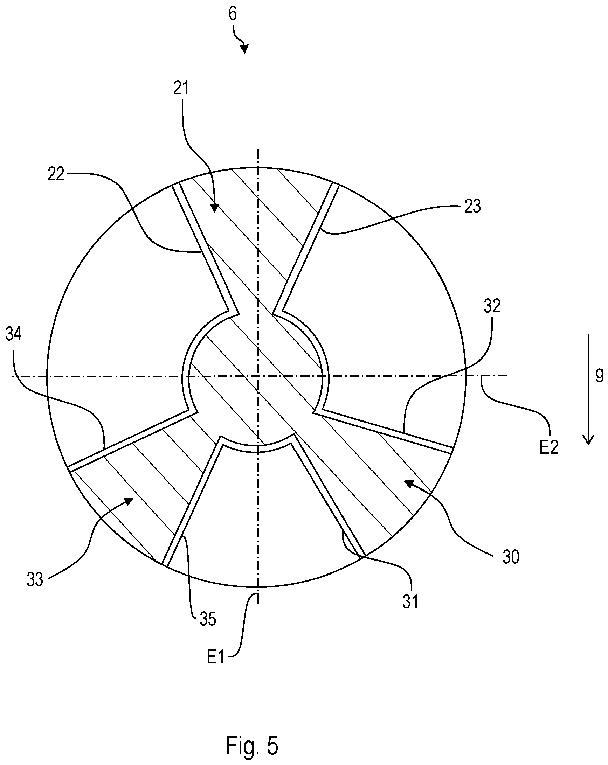

Die Fig. 5 zeigt eine Ansicht einer weiteren Ausführungsform einer Befestigungsvorrichtung 6. Die Befestigungsvorrichtung 6 gemäß der Fig. 5 unterscheidet sich von der Befestigungsvorrichtung 6 gemäß der Fig. 4 nur dadurch, dass nicht nur ein Kanal 21, sondern drei Kanäle 21, 30, 33 vorgesehen sind, die von der ersten Klebefläche 15 durch die zweite Klebefläche 16 hindurchführen. Die Kanäle 21, 30, 33 sind vorzugsweise gleichmäßig über einen Umfang des Befestigungselements 7 verteilt angeordnet. Insbesondere sind ein erster Kanal 21, ein zweiter Kanal 30 sowie ein dritter Kanal 33 vorgesehen. Der dritte Kanal 33 weist wie der erste Kanal 21 und der zweite Kanal 30 zwei Seitenwände 34, 35 auf, die so geneigt sind, dass sich auch der dritte Kanal 33 in Richtung der Symmetrieachse M7 verjüngt. Das Befestigungselement 7 kann auch mehr als drei Kanäle 21, 30, 33 umfassen. Beispielsweise können auch vier oder mehr Kanäle 21, 30, 33 vorgesehen sein. Vorzugsweise sind die Kanäle 21, 30, 33 immer symmetrisch, insbesondere spiegelsymmetrisch, zu den Symmetrieebenen E1, E2 angeordnet. Die Kanäle 21, 30, 33 können beliebig zu der Schwerkraftrichtung g orientiert sein.

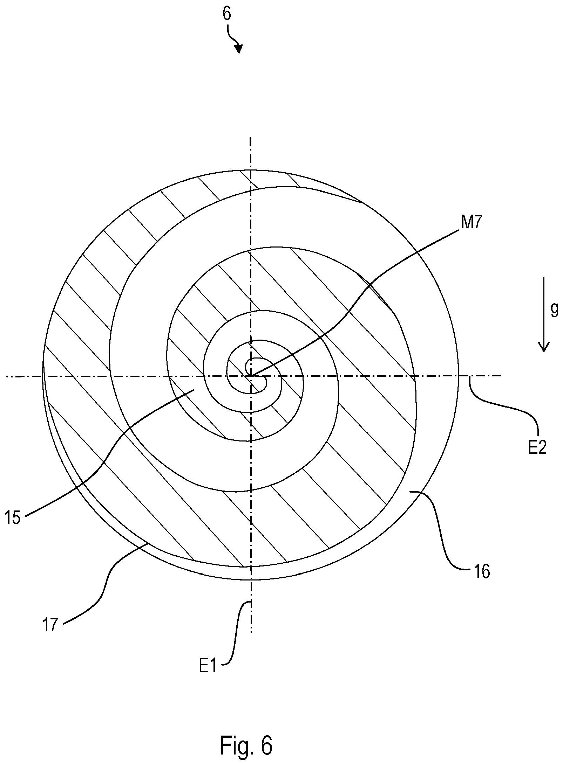

Die Fig. 6 zeigt eine Ansicht einer weiteren Ausführungsform einer Befestigungsvorrichtung 6. Die Befestigungsvorrichtung 6 gemäß der Fig. 6 unterscheidet sich von der Befestigungsvorrichtung gemäß den Fig. 2 und 3 nur dadurch, dass der Stegabschnitt 17 nicht im Wesentlichen kreisförmig, sondern spiralförmig ausgebildet ist. Das heißt, die erste Klebefläche 15 und die zweite Klebefläche 16 sind spiralförmig ineinander verschlungen. Hierdurch kann eine besonders gleichmäßige Kraftverteilung erreicht werden.

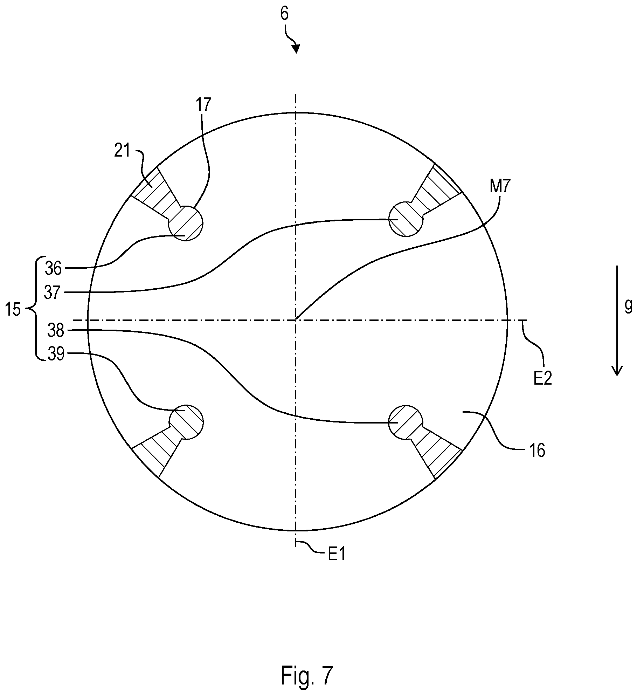

Die Fig. 7 zeigt eine Ansicht einer weiteren Ausführungsform einer Befestigungsvorrichtung 6. Die Befestigungsvorrichtung 6 gemäß der Fig. 7 unterscheidet sich von der Befestigungsvorrichtung 6 gemäß den Fig. 2 und 3 dadurch, dass die erste Klebefläche 15 in eine Vielzahl, beispielsweise in vier, voneinander getrennter erster Flächenabschnitte 36 bis 39 unterteilt ist. Jeder der ersten Flächenabschnitte 36 bis 39 ist mit Hilfe eines eigenen Stegabschnitts 17, von denen in der Fig. 7 nur einer mit einem Bezugszeichen versehen ist, von der zweiten Klebefläche 16 abgetrennt.

Jeder erste Flächenabschnitt 36 bis 39 umfasst weiterhin einen, wie schon zuvor erläuterten, Kanal 21, der sich in Richtung der Symmetrieachse M7 verjüngt und durch den der erste Klebstoff 19 beim Applizieren der Befestigungsvorrichtung 6 an der Oberfläche 5 herausgedrückt werden kann. Die ersten Flächenabschnitte 36 bis 39 sind vorzugsweise symmetrisch zu der ersten Symmetrieebene E1 und symmetrisch zu der zweiten Symmetrieebene E2 angeordnet. Die Anzahl der ersten Flächenabschnitte 36 bis 39 ist beliebig. Es können beispielsweise zwei, drei, vier, fünf, sechs oder auch mehr erste Flächenabschnitte 36 bis 39 vorgesehen sein, die vorzugsweise symmetrisch innerhalb der zweiten Klebefläche 16 verteilt sind.

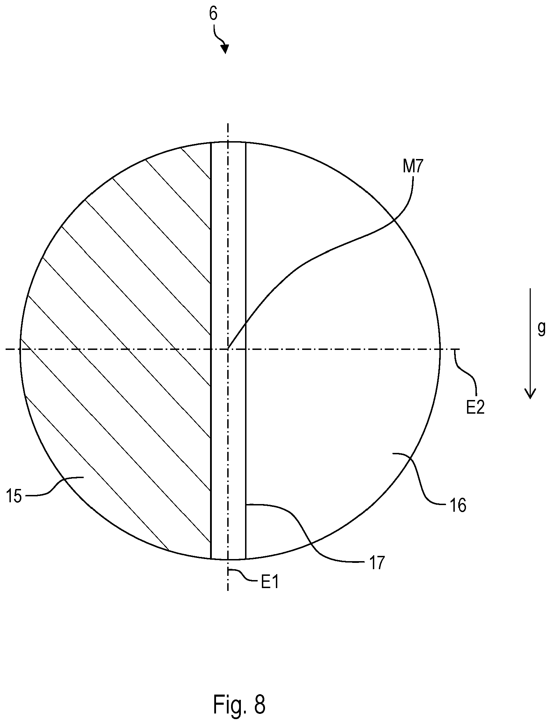

Die Fig. 8 zeigt eine Ansicht einer weiteren Ausführungsform einer Befestigungsvorrichtung 6. Die Befestigungsvorrichtung 6 gemäß der Fig. 8 unterscheidet sich von der Befestigungsvorrichtung 6 gemäß den Fig. 2 und 3 dadurch, dass die erste Klebefläche 15 nicht innerhalb der zweiten Klebefläche 16 angeordnet ist. Insbesondere sind die erste Klebefläche 15 und die zweite Klebefläche 16 nebeneinander angeordnet. Hierzu kann der Stegabschnitt 17 mittig zwischen der ersten Klebefläche 15 und der zweiten Klebefläche 16, das heißt symmetrisch zu der ersten Symmetrieebene E1 angeordnet sein. Der Stegabschnitt 17 kann allerdings auch asymmetrisch positioniert sein, so dass die Klebeflächen 15, 16 unterschiedlich groß sind.

Die erste Klebefläche 15 und die zweite Klebefläche 16 sind dann bevorzugt symmetrisch zu der zweiten Symmetrieebene E2 und unsymmetrisch zu der ersten Symmetrieebene E1 angeordnet. Umgekehrt können die erste Klebefläche 15 und die zweite Klebefläche 16 auch unsymmetrisch zu der zweiten Symmetrieebene E2 und symmetrisch zu der ersten Symmetrieebene E1 angeordnet sein.

Die Befestigungsvorrichtung 6 gemäß der Fig. 8 kann besonders einfach und kostengünstig hergestellt werden. Der Stegabschnitt 17 kann beliebig zu der Schwerkraftrichtung g orientiert sein. Das heißt, der Stegabschnitt 17 kann in der Orientierung der Fig. 8 vertikal, horizontal oder schräg angeordnet sein.

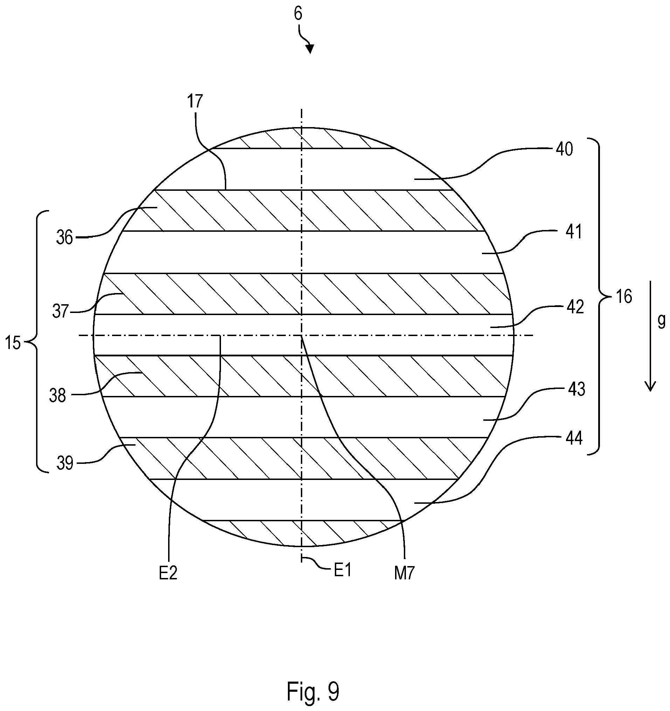

Die Fig. 9 zeigt eine Ansicht einer weiteren Ausführungsform einer Befestigungsvorrichtung 6. Bei dieser Ausführungsform der Befestigungsvorrichtung 6 sind im Gegensatz zu der Ausführungsform der Befestigungsvorrichtung 6 gemäß den Fig. 2 und 3 ist die erste Klebefläche 15 in eine Vielzahl an ersten Flächenabschnitten 36 bis 39 unterteilt. Die zweite Klebefläche 16 ist analog zu der ersten Klebefläche 15 ebenfalls in eine Vielzahl an zweiten Flächenabschnitten 40 bis 44 unterteilt. Die Anzahl der ersten Flächenabschnitt 36 bis 39 und die Anzahl der zweiten Flächenabschnitte 40 bis 44 ist beliebig. Beispielsweise können vier erste Flächenabschnitte 36 bis 39 und fünf zweite Flächenabschnitte 40 bis 44 vorgesehen sein, die abwechselnd angeordnet sind, so dass sich ein zeilenförmiger Aufbau ergibt. Insbesondere ist immer zwischen zwei ersten Flächenabschnitte 36 bis 39 ein zweiter Flächenabschnitt 40 bis 44 und umgekehrt angeordnet.

Zwischen den ersten Flächenabschnitten 36 bis 39 und den zweiten Flächenabschnitten 40 bis 44 ist jeweils ein Stegabschnitt 17 vorgesehen, von denen in der Fig. 9 jedoch nur einer mit einem Bezugszeichen versehen ist.

Die ersten Flächenabschnitte 36 bis 39 und die zweiten Flächenabschnitte 40 bis 44 können symmetrisch zu den Symmetrieebenen E 1, E2 oder zumindest symmetrisch zu einer der Symmetrieebenen E 1, E2 angeordnet sein. Die ersten Flächenabschnitte 36 bis 39 und die zweiten Flächenabschnitte 40 bis 44 können auch schräg zu den Symmetrieebenen E 1, E2 positioniert sein. Die Flächenabschnitte 36 bis 44 können beliebig zu der Schwerkraftrichtung g orientiert sein. Das heißt, die Flächenabschnitte 46 bis 44 können in der Orientierung der Fig. 9 horizontal, vertikal oder schräg angeordnet sein.

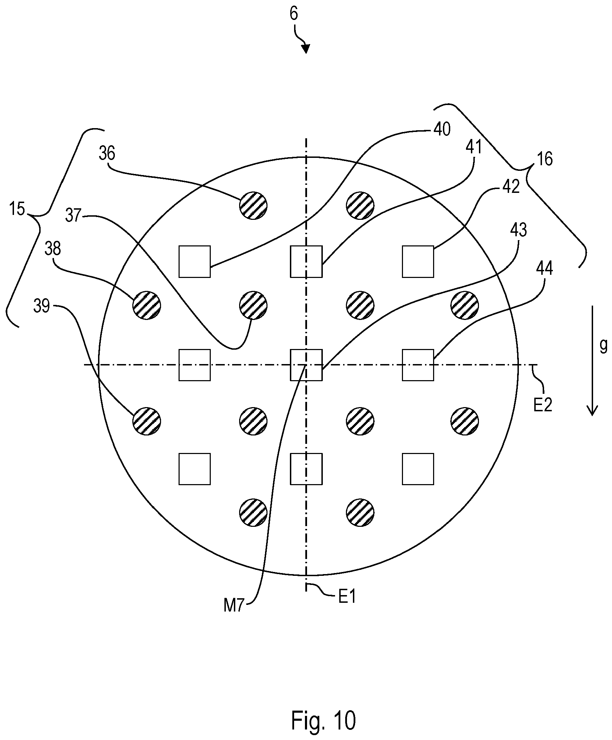

Die Fig. 10 zeigt eine Ansicht einer weiteren Ausführungsform einer Befestigungsvorrichtung 6. Bei dieser Ausführungsform der Befestigungsvorrichtung 6 ist im Vergleich zu der Ausführungsform der Befestigungsvorrichtung 6 gemäß den Fig. 2 und 3 die erste Klebefläche 15 in eine Vielzahl an ersten Flächenabschnitten 36 bis 39 unterteilt, von denen in der Fig. 10 lediglich vier mit einem Bezugszeichen versehen sind. Die ersten Flächenabschnitte 36 bis 39 sind in der Fig. 10 als Kreise dargestellt. Die zweite Klebefläche 16 ist analog zu der ersten Klebefläche 15 ebenfalls in eine Vielzahl an zweiten Flächenabschnitten 40 bis 44 unterteilt, von denen in der Fig. 10 jedoch lediglich fünf mit einem Bezugszeichen versehen sind. Die zweiten Flächenabschnitte 40 bis 44 sind in der Fig. 10 als Quadrate dargestellt. Die Anzahl der ersten Flächenabschnitte 36 bis 39 und die Anzahl der zweiten Flächenabschnitte 40 bis 44 ist beliebig. Beispielsweise sind gleich viele erste Flächenabschnitte 36 bis 39 und zweite Flächenabschnitte 40 bis 44 vorgesehen.

Alternativ können auch unterschiedlich viele erste Flächenabschnitte 36 bis 39 und zweite Flächenabschnitte 40 bis 44 vorgesehen sein. Die ersten Flächenabschnitte 36 bis 39 und die zweiten Flächenabschnitte 40 bis 44 sind matrixförmig angeordnet, so dass jeweils ein erster Flächenabschnitt 36 bis 39 benachbart zu einem zweiten Flächenabschnitt 40 bis 44 und umgekehrt angeordnet ist. Die ersten Flächenabschnitte 36 bis 39 und die zweiten Flächenabschnitte 40 bis 44 sind vorzugsweise sowohl symmetrisch zu der ersten Symmetrieebene E1 als auch symmetrisch zu der zweiten Symmetrieebene E2 angeordnet. Zwischen den ersten Flächenabschnitten 36 bis 39 und den zweiten Flächenabschnitten 40 bis 44 können, wie zuvor schon beschrieben, Stegabschnitte 17 vorgesehen sein, die in der Fig. 10 nicht dargestellt sind.

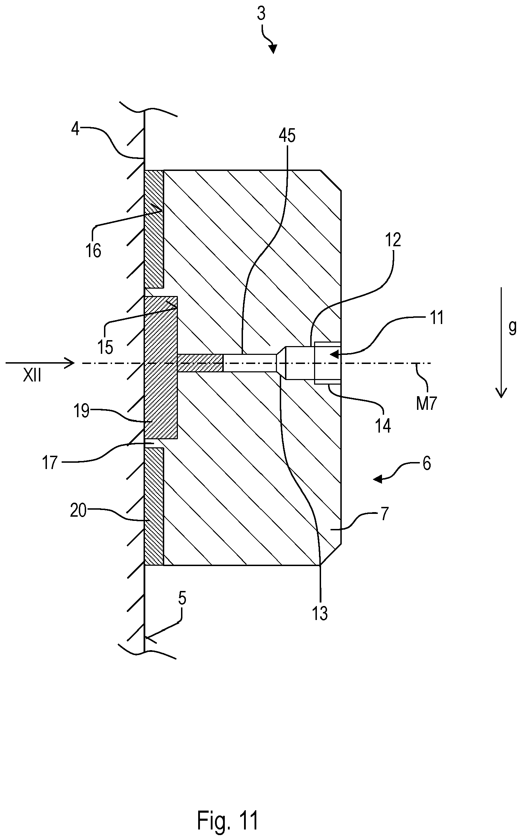

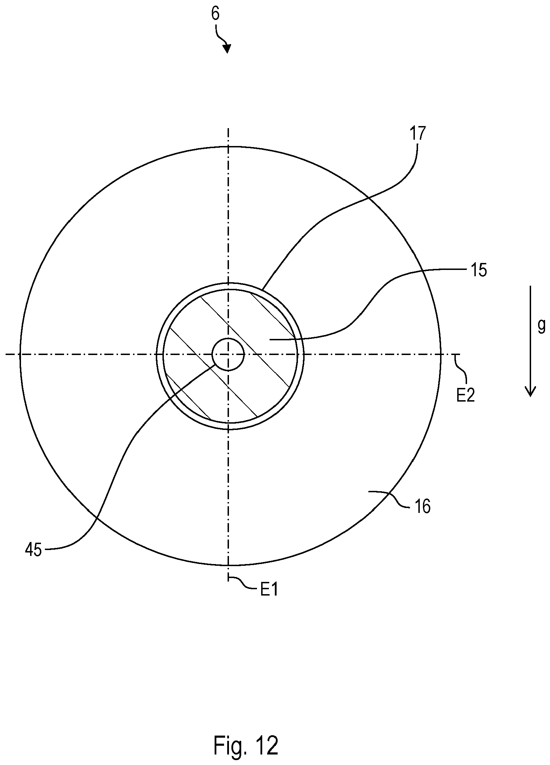

Die Fig. 11 zeigt eine schematische Schnittansicht einer weiteren Ausführungsform einer Befestigungsanordnung 3 mit einer Befestigungsvorrichtung 6. Die Befestigungsvorrichtung 6 gemäß der Fig. 11 unterscheidet sich von der Befestigungsvorrichtung 6 gemäß den Fig. 2 und 3 dadurch, dass, wie in der Fig. 12, die die Ansicht XII gemäß der Fig. 11 zeigt, dargestellt, die erste Klebefläche 15 vollständig von der zweiten Klebefläche 16 umgeben ist. Das heißt, die erste Klebefläche 15 und die zweite Klebefläche 16 sind sowohl symmetrisch zu der ersten Symmetrieebene E1 als auch zu der zweiten Symmetrieebene E2 aufgebaut. Der Stegabschnitt 17 ist dabei als geschlossene kreisförmige Geometrie ausgebildet. Ausgehend von der ersten Klebefläche 15 erstreckt sich ein Kanal 45 in Form einer rotationssymmetrisch zu der Symmetrieasche M7 ausgebildeten Bohrung in den Auslauf 13 der Bohrung 12 des Aufnahmeabschnitts 11 hinein. Durch den symmetrischen Aufbau der Klebeflächen 15, 16 kann eine besonders gleichmäßige Kraftverteilung erreicht werden. Die Kontrolle, ob der erste Klebstoff 19 die erste Klebefläche 15 und die Oberfläche 5 vollständig benetzt, kann dadurch erfolgen, dass der erste Klebstoff 19 durch den Kanal 45 in den Auslauf 13 gedrückt wird.

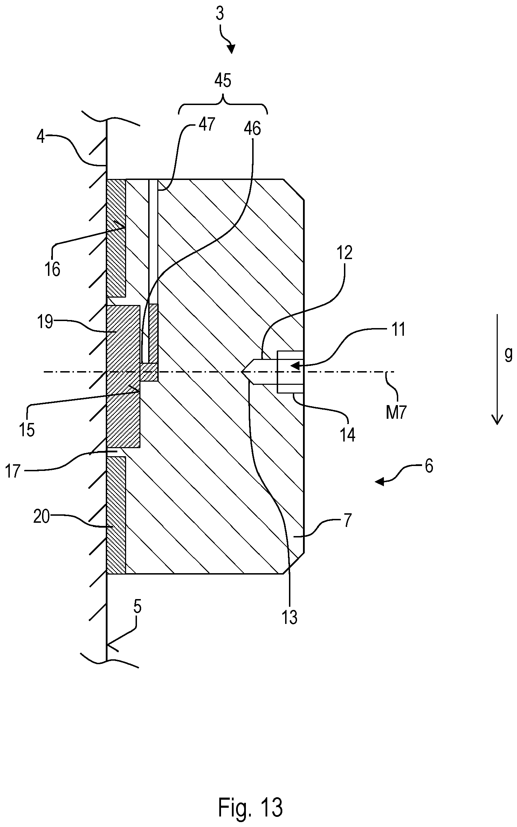

Die Fig. 13 zeigt eine schematische Schnittansicht einer weiteren Ausführungsform einer Befestigungsanordnung 3 mit einer Befestigungsvorrichtung 6. Die Befestigungsvorrichtung 6 gemäß der Fig. 13 unterscheidet sich von der Befestigungsvorrichtung 6 gemäß den Fig. 11 und 12 nur dadurch, dass der Kanal 45 nicht in den Auslauf 13 der Bohrung 12 des Aufnahmeabschnitts 11 mündet, sondern, dass der Kanal 45 eine erste sich in Richtung des Auslaufs 13 jedoch vor diesem endende erste Bohrung 46 und eine sich senkrecht zur Bohrung 46 und in diese hineinmündende zweite Bohrung 47 umfasst. Hierdurch kann verhindert werden, dass der erste Klebstoff 19 in den Aufnahmeabschnitt 11 hineinläuft und das Gewinde 14 verklebt. Die Bohrung 47 kann beliebig zu der Schwerkraftrichtung g orientiert sein. Das heißt, die Bohrung 47 kann in der Orientierung der Fig. 13 nach oben, nach unten oder zur Seite weisen.

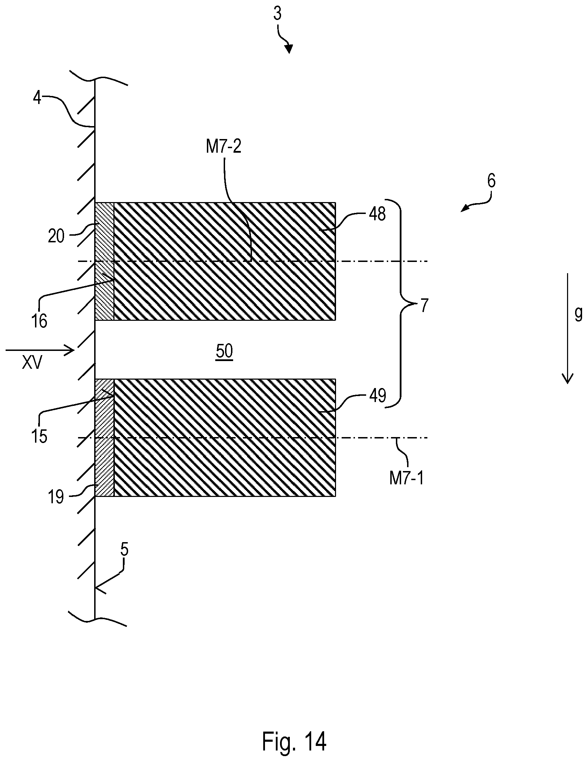

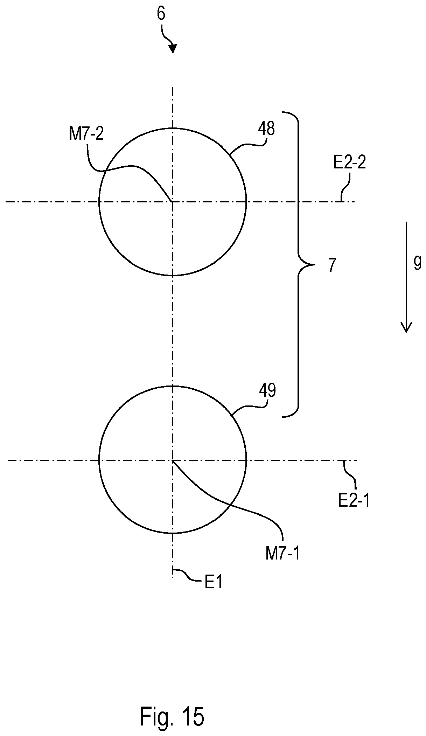

Die Fig. 14 zeigt eine schematische Schnittansicht einer weiteren Ausführungsform einer Befestigungsanordnung 3 mit einer Befestigungsvorrichtung 6. Die Fig. 15 zeigt die Ansicht XV gemäß der Fig. 14, wobei die Klebeflächen 15, 16 in der Fig. 15 nicht dargestellt sind. Bei dieser Ausführungsform der Befestigungsvorrichtung 6 ist das Befestigungselement 7 in einen ersten Befestigungselementabschnitt 48 sowie einen von dem ersten Befestigungselementabschnitt 48 getrennten zweiten Befestigungselementabschnitt 49 unterteilt. Der erste Befestigungselementabschnitt 48 kann rotationssymmetrisch zu einer Mittel- oder Symmetrieachse M7-1 ausgebildet sein und der zweite Befestigungselementabschnitt 49 kann rotationssymmetrisch zu einer Mittel- oder Symmetrieachse M7-2 ausgebildet sein. Die Symmetrieachsen M7-1, M7-2 sind vorzugsweise parallel zueinander positioniert.

Die Befestigungselementabschnitte 48, 49 können zylinderförmig ausgebildet sein und einen beliebigen Querschnitt, beispielsweise einen kreisrunden Querschnitt, aufweisen. Die Befestigungselementabschnitte 48, 49 können beabstandet von der Oberfläche 5 miteinander verbunden sein und einen gemeinsamen Aufnahmeabschnitt 11 aufweisen. Bei dieser Ausführungsform der Befestigungsvorrichtung 6 sind die erste Klebefläche 15 und die zweite Klebefläche 16 durch einen Luftspalt 50 voneinander getrennt. Das heißt, der Stegabschnitt 17 ist verzichtbar. Die Befestigungselementabschnitte 48, 49 können symmetrisch zu der Symmetrieebene E1 aufgebaut sein. Jeder Befestigungselementabschnitt 48, 49 kann symmetrisch zu einer jeweiligen Symmetrieebene E2-1, E2-2 aufgebaut sein. Die Befestigungselementabschnitte 48, 49 können beliebig zu der Schwerkraftrichtung g orientiert sein. Das heißt, die Befestigungselementabschnitte 48, 49 können in der Orientierung der Fig. 14 und 15 übereinander, nebeneinander oder versetzt zueinander positioniert sein.

Mit Hilfe der Befestigungsvorrichtung 6 kann aufgrund der Verwendung der Klebstoffe 19, 20 im Vergleich zu einer Schweißverbindung eine Schwächung des homogenen Grundmaterials der Wandung 4 verhindert werden. Der Verzicht auf Schweißnähte, die Ausgangspunkt von Rissbildung bei Belastung sein können, führt zu einer höheren Betriebszuverlässigkeit der Befestigungsvorrichtung 6 im Vergleich zu aufgeschweißten Gewindebutzen. Aufgrund der Klebverbindung zwischen der Befestigungsvorrichtung 6 und der Oberfläche 5 können unterschiedliche Materialien für das Befestigungselement 7 und die Wandung 4 verwendet werden. Hierdurch kann beispielsweise Kontaktkorrosion verhindert werden.

Die Befestigungsvorrichtung 6 ist sowohl zur Erstausrüstung als auch als Nachrüstlösung geeignet. Im Vergleich zu aufgeschweißten Gewindebutzen ist ein geringer Aufwand bei Nachrüstlösungen erforderlich, da auf eine Wärmeeinkopplung in die Wandung 4 verzichtet wird. Eine Demontage wärmeempfindlicher Komponente, wie sie bei Schweißlösungen erforderlich ist, ist verzichtbar. Auch die Demontage oder Außerbetriebnahme elektronischer Komponenten ist verzichtbar, da bei der Montage der Befestigungsvorrichtung 6 in die Wandung 4 kein Strom eingeleitet wird.

Mit Hilfe des zweiten Klebstoffs 20 können die quasistatischen und dynamischen Lasten im Betrieb der Befestigungsvorrichtung 6 übertragen werden. Bei einer einmaligen hochdynamischen Belastung, beispielsweise bei einer Ansprengung des Fahrzeugs 1 oder einem Crash, versagt die Befestigungsvorrichtung 6 nicht, da zwar der zweite Klebstoff 20 aufgrund seiner geringeren Dehnbarkeit reißen oder brechen kann, jedoch der erste Klebstoff 19 aufgrund seiner hohen Dehnbarkeit nicht versagt. Die beiden Klebstoffe 19, 20 erfüllen ihre Funktion somit getrennt voneinander. Mit Hilfe des Stegabschnitts 17 kann die Klebschichtdicke a15 des ersten Klebstoffs 19 sowie die Klebschichtdicke a16 des zweiten Klebstoffs 20 komfortabel und reproduzierbar eingestellt werden. Alternativ kann die Einstellung der Klebschichtdicken a15, a16 auch durch die Beimischung von Glaskugeln in einen der Klebstoffe 19, 20 erfolgen.

Obwohl die vorliegende Erfindung anhand von Ausführungsbeispielen beschrieben wurde, ist sie vielfältig modifizierbar.

### BEZUGSZEICHENLISTE

- 1: Fahrzeug
- 2: Kabine
- 3: Befestigungsanordnung
- 4: Wandung
- 5: Oberfläche
- 6: Befestigungsvorrichtung
- 7: Befestigungselement
- 8: Rückseite
- 9: Außenfläche
- 10: Fase
- 11: Aufnahmeabschnitt
- 12: Bohrung
- 13: Auslauf
- 14: Gewinde
- 15: Klebefläche
- 16: Klebefläche
- 17: Stegabschnitt
- 18: Stirnseite
- 19: Klebstoff
- 20: Klebstoff
- 21: Kanal
- 22: Seitenwand
- 23: Seitenwand
- 24: Fixierrahmen
- 25: Rückseite
- 26: Außenfläche
- 27: Innenfläche
- 28: Stirnseite
- 29: Klebstoff
- 30: Kanal
- 31: Seitenwand
- 32: Seitenwand
- 33: Kanal
- 34: Seitenwand
- 35: Seitenwand
- 36: Flächenabschnitt
- 37: Flächenabschnitt
- 38: Flächenabschnitt
- 39: Flächenabschnitt
- 40: Flächenabschnitt
- 41: Flächenabschnitt
- 42: Flächenabschnitt
- 43: Flächenabschnitt
- 44: Flächenabschnitt
- 45: Kanal
- 46: Bohrung
- 47: Bohrung
- 48: Befestigungselementabschnitt
- 49: Befestigungselementabschnitt
- 50: Luftspalt

- a15: Klebschichtdicke
- a16: Klebschichtdicke
- BM: Befestigungsmittel
- d7: Dicke
- D7: Durchmesser
- E1: Symmetrieebene
- E2: Symmetrieebene
- E2-1: Symmetrieebene
- E2-2: Symmetrieebene
- g: Schwerkraftrichtung
- I: Innenraum
- M7: Symmetrieachse
- M7-1: Symmetrieachse
- M7-2: Symmetrieachse
- U: Umgebung

## Patentansprüche

1. Befestigungsvorrichtung (6) für den militärischen Bereich zum Befestigen an einer Oberfläche (5), mit:
einem Befestigungselement (7), das einen Aufnahmeabschnitt (11) für ein Befestigungsmittel (BM) aufweist,
einer an dem Befestigungselement (7) vorgesehenen ersten Klebefläche (15), die einen ersten Klebstoff (19) aufweist, und
einer von der ersten Klebefläche (15) getrennten und an dem Befestigungselement (7) vorgesehenen zweiten Klebefläche (16), die einen zweiten Klebstoff (20) aufweist,
wobei der erste Klebstoff (19) eine größere Dehnbarkeit als der zweite Klebstoff (20) aufweist,
wobei die erste Klebefläche (15) mit Hilfe eines Stegabschnitts (17) von der zweiten Klebefläche (16) getrennt ist, und
wobei der Stegabschnitt (17) aus einem elastisch verformbaren Material ausgebildet ist.

2. Befestigungsvorrichtung nach Anspruch 1,
**dadurch gekennzeichnet,**
**dass** der erste Klebstoff (19) eine erste Klebschichtdicke (a15) und der zweite Klebstoff (19) eine zweite Klebschichtdicke (a16) aufweist, die kleiner als die, größer als die oder gleich der ersten Klebschichtdicke (a15) ist.

3. Befestigungsvorrichtung nach Anspruch 2,
**dadurch gekennzeichnet,**
**dass** der erste Klebstoff (19) um bis zu 50%, bevorzugt um bis zu 60%, weiter bevorzugt um bis zu 70%, weiter bevorzugt um bis zu 80%, weiter bevorzugt um bis zu 90%, weiter bevorzugt um bis zu 100%, der ersten Klebschichtdicke (a15) dehnbar ist.

4. Befestigungsvorrichtung nach Anspruch 2 oder 3,
**dadurch gekennzeichnet,**
**dass** der zweite Klebstoff (20) um bis zu 10%, bevorzugt um bis zu 8%, weiter bevorzugt um bis zu 6%, weiter bevorzugt um bis zu 4%, weiter bevorzugt um bis zu 2%, der zweiten Klebschichtdicke (a16) dehnbar ist.

5. Befestigungsvorrichtung nach einem der Ansprüche 1 - 4,
**dadurch gekennzeichnet,**
**dass** der erste Klebstoff (19) ein Polyurethan und der zweite Klebstoff (20) ein Epoxidharz ist.

6. Befestigungsvorrichtung nach einem der Ansprüche 1 - 5,
**dadurch gekennzeichnet,**
**dass** die erste Klebefläche (15) und/oder die zweite Klebefläche (16) spiegelsymmetrisch zu einer ersten Symmetrieebene (E1) und/oder zu einer zweiten Symmetrieebene (E2) des Befestigungselements (7) aufgebaut sind.

7. Befestigungsvorrichtung nach einem der Ansprüche 1 - 6,
**dadurch gekennzeichnet,**
**dass** die erste Klebefläche (15) zumindest abschnittsweise innerhalb der zweiten Klebefläche (16) angeordnet ist.

8. Befestigungsvorrichtung nach einem der Ansprüche 1 - 7,
**dadurch gekennzeichnet,**
**dass** die erste Klebefläche (15) und die zweite Klebefläche (16) spiralförmig ineinander verschlungen sind.

9. Befestigungsvorrichtung nach einem der Ansprüche 1 - 8,
**dadurch gekennzeichnet,**
**dass** der Stegabschnitt (17) eine Stirnseite (18) aufweist, die zum Einstellen einer ersten Klebschichtdicke (a15) des ersten Klebstoffs (19) und/oder einer zweiten Klebschichtdicke (a16) des zweiten Klebstoffs (20) die Oberfläche (5) kontaktiert.

10. Befestigungsvorrichtung nach einem der Ansprüche 1 - 9,
**dadurch gekennzeichnet,**
**dass** zumindest ein Kanal (21, 30, 33, 45) vorgesehen ist, der von der ersten Klebefläche (15) durch die zweite Klebefläche (16) hindurch oder an dieser vorbei führt.

11. Befestigungsvorrichtung nach Anspruch 10,
**dadurch gekennzeichnet,**
**dass** der zumindest eine Kanal (21, 30, 33) Seitenwände (22, 23, 31, 32, 34, 35) aufweist, die so angeordnet sind, dass sich der zumindest eine Kanal (21, 30, 33) in Richtung einer Symmetrieachse (M7) des Befestigungselements (7) verengt.

12. Befestigungsvorrichtung nach Anspruch 10,
**dadurch gekennzeichnet,**
**dass** der zumindest eine Kanal (45) in eine Bohrung (12) des Aufnahmeabschnitts (11) mündet.

13. Befestigungsvorrichtung nach einem der Ansprüche 1 - 12,
**dadurch gekennzeichnet,**
**dass** die erste Klebefläche (15) in eine Vielzahl voneinander getrennter erster Flächenabschnitte (36 - 39) und die zweite Klebefläche (16) in eine Vielzahl voneinander getrennter zweiter Flächenabschnitte (40 - 44) unterteilt ist, und dass die ersten Flächenabschnitte (36 - 39) und die zweiten Flächenabschnitte (40 - 44) zeilenförmig oder matrixförmig angeordnet sind.

14. Befestigungsvorrichtung nach einem der Ansprüche 1 - 13,
**dadurch gekennzeichnet,**
**dass** das Befestigungselement (7) einen ersten Befestigungsabschnitt (48), der die erste Klebefläche (15) mit dem ersten Klebstoff (19) aufweist, und einen von dem ersten Befestigungsabschnitt (48) getrennten zweiten Befestigungsabschnitt (49) umfasst, der die zweite Klebefläche (16) mit dem zweiten Klebstoff (20) aufweist.

## Claims

1. A fastening device (6) for the military sector for fastening to a surface (5), comprising:
a fastening element (7) which comprises a receiving portion (11) for a fastening means (BM),
a first adhesive surface (15) which is provided on the fastening element (7) and comprises a first adhesive (19), and
a second adhesive surface (16) which is separated from the first adhesive surface (15) and provided on the fastening element (7), which second adhesive surface (15) comprises a second adhesive (20),
wherein the first adhesive (19) has a greater stretchability than the second adhesive (20),
wherein the first adhesive surface (15) is separated from the second adhesive surface (16) by means of a web portion (17), and
wherein the web portion (17) is formed from a resiliently deformable material.

2. The fastening device according to claim 1,
**characterized in that**,
the first adhesive (19) comprises a first adhesive layer thickness (a15) and the second adhesive (19) comprises a second adhesive layer thickness (a16) which is smaller than, larger than, or equal to the first adhesive layer thickness (a15).

3. The fastening device according to claim 2,
**characterized in that**,
the first adhesive (19) is stretchable by up to 50%, preferably by up to 60%, more preferably by up to 70%, more preferably by up to 80%, more preferably by up to 90%, more preferably by up to 100% of the first adhesive layer thickness (a15).

4. The fastening device according to claim 2 or 3,
**characterized in that**,
the second adhesive (20) is stretchable by up to 10%, preferably by up to 8%, more preferably by up to 6%, more preferably by up to 4%, more preferably by up to 2% of the second adhesive layer thickness (a16).

5. The fastening device according to any of claims 1 to 4,
**characterized in that**,
the first adhesive (19) is a polyurethane and the second adhesive (20) is an epoxy resin.

6. The fastening device according to any of claims 1 to 5,
**characterized in that**,
the first adhesive surface (15) and/or the second adhesive surface (16) are constructed mirror-symmetrically to a first plane of symmetry (E1) and/or to a second plane of symmetry (E2) of the fastening element (7).

7. The fastening device according to any of claims 1 to 6,
**characterized in that**,
the first adhesive surface (15) is at least sectionally arranged within the second adhesive surface (16).

8. The fastening device according to any of claims 1 to 7,
**characterized in that**,
the first adhesive surface (15) and the second adhesive surface (16) are spirally intertwined.

9. The fastening device according to any of claims 1 to 8,
**characterized in that**,
the web portion (17) comprises an end face (18) contacting the surface (5) for adjusting a first adhesive layer thickness (a15) of the first adhesive (19) and/or a second adhesive layer thickness (a16) of the second adhesive (20).

10. The fastening device according to any of claims 1 to 9,
**characterized in that**,
at least one channel (21, 30, 33, 45) is provided passing from the first adhesive surface (15) through the second adhesive surface (16) or by it.

11. The fastening device according to claim 10,
**characterized in that**,
the at least one channel (21, 30, 33) comprises side walls (22, 23, 31, 32, 34, 35) arranged such that the at least one channel (21, 30, 33) narrows toward an axis of symmetry (M7) of the fastening element (7).

12. The fastening device according to claim 10,
**characterized in that**,
the at least one channel (45) joins a boring (12) of the receiving portion (11).

13. The fastening device according to any of claims 1 to 12,
**characterized in that**,
the first adhesive surface (15) is divided into a plurality of separated first surface portions (36-39) and the second adhesive surface (16) is divided into a plurality of separated second surface portions (40-44), and that the first surface portions (36-39) and the second surface portions (40-44) are arranged in a row or matrix pattern.

14. The fastening device according to any of claims 1 to 13,
**characterized in that**,
the fastening element (7) comprises a first fastening portion (48), which comprises the first adhesive surface (15) comprising the first adhesive (19), and a second fastening portion (49) separated from the first fastening portion (48), which comprises the second adhesive surface (16) comprising the second adhesive (20).

## Revendications

1. Dispositif de fixation (6) destiné au secteur militaire pour une fixation à une surface (5), comprenant :
un élément de fixation (7) qui comprend une partie de réception (11) destinée à un moyen de fixation (BM),
une première surface d'adhésif (15) qui est disposée sur l'élément de fixation (7) et qui comprend un premier adhésif (19), et
une seconde surface d'adhésif (16) qui est séparée de la première surface d'adhésif (15) et qui est disposée sur l'élément de fixation (7), laquelle seconde surface d'adhésif (15) comprend un second adhésif (20),
dans lequel le premier adhésif (19) a une aptitude à l'étirage supérieure à celle du second adhésif (20),
dans lequel la première surface d'adhésif (15) est séparée de la seconde surface d'adhésif (16) au moyen d'une partie bande (17), et
dans lequel la partie bande (17) est formée à partir d'un matériau élastiquement déformable.

2. Dispositif de fixation selon la revendication 1,
**caractérisé en ce que**,
le premier adhésif (19) comprend une épaisseur de première couche d'adhésif (a15) et le second adhésif (19) comprend une épaisseur de seconde couche d'adhésif (a16) qui est inférieure, supérieure, ou égale à l'épaisseur de première couche d'adhésif (a15).

3. Dispositif de fixation selon la revendication 2,
**caractérisé en ce que**,
le premier adhésif (19) peut être étiré jusqu'à 50 %, de préférence jusqu'à 60 %, de préférence encore jusqu'à 70 %, de préférence encore jusqu'à 80 %, de préférence encore jusqu'à 90 %, de préférence encore jusqu'à 100 % de l'épaisseur de première couche d'adhésif (a15).

4. Dispositif de fixation selon la revendication 2 ou la revendication 3,
**caractérisé en ce que**,
le second adhésif (20) peut être étiré jusqu'à 10 %, de préférence jusqu'à 8 %, de préférence encore jusqu'à 6 %, de préférence encore jusqu'à 4 %, de préférence encore jusqu'à 2 % de l'épaisseur de seconde couche d'adhésif (a16).

5. Dispositif de fixation selon l'une quelconque des revendications 1 à 4,
**caractérisé en ce que**,
le premier adhésif (19) est un polyuréthane et le second adhésif (20) est une résine époxy.

6. Dispositif de fixation selon l'une quelconque des revendications 1 à 5,
**caractérisé en ce que**,
la première surface d'adhésif (15) et/ou la seconde surface d'adhésif (16) sont construites avec une symétrie bilatérale par rapport à un premier plan de symétrie (E1) et/ou à un second plan de symétrie (E2) de l'élément de fixation (7).

7. Dispositif de fixation selon l'une quelconque des revendications 1 à 6,
**caractérisé en ce que**,
la première surface d'adhésif (15) est disposée au moins en partie à l'intérieur de la seconde surface d'adhésif (16).

8. Dispositif de fixation selon l'une quelconque des revendications 1 à 7,
**caractérisé en ce que**,
la première surface d'adhésif (15) et la seconde surface d'adhésif (16) sont entrelacées en spirale.

9. Dispositif de fixation selon l'une quelconque des revendications 1 à 8,
**caractérisé en ce que**,
la partie bande (17) comprend une face d'extrémité (18) contactant la surface (5) à des fins de réglage d'une épaisseur de première couche d'adhésif (a15) du premier adhésif (19) et/ou d'une épaisseur de seconde couche d'adhésif (a16) du second adhésif (20).

10. Dispositif de fixation selon l'une quelconque des revendications 1 à 9,
**caractérisé en ce que**,
au moins un canal (21, 30, 33, 45) est ménagé passant de la première surface d'adhésif (15) à travers la seconde surface d'adhésif (16) ou par cette dernière.

11. Dispositif de fixation selon la revendication 10,
**caractérisé en ce que**,
l'au moins un canal (21, 30, 33) comprend des parois latérales (22, 23, 31, 32, 34, 35) disposées de sorte que l'au moins un canal (21, 30, 33) aille en rétrécissant en direction d'un axe de symétrie (M7) de l'élément de fixation (7).

12. Dispositif de fixation selon la revendication 10,
**caractérisé en ce que**,
l'au moins un canal (45) rejoint un alésage (12) de la partie de réception (11).

13. Dispositif de fixation selon l'une quelconque des revendications 1 à 12,
**caractérisé en ce que**,
la première surface d'adhésif (15) est divisée en une pluralité de parties de première surface séparées (36-39) et la seconde surface d'adhésif (16) est divisée en une pluralité de parties de seconde surface séparées (40-44), et **en ce que** les parties de première surface (36-39) et les parties de seconde surface (40-44) sont disposées suivant un motif de rangées ou de matrice.

14. Dispositif de fixation selon l'une quelconque des revendications 1 à 13,
**caractérisé en ce que**,
l'élément de fixation (7) comprend une première partie de fixation (48), qui comprend la première surface d'adhésif (15) comprenant le premier adhésif (19), et une seconde partie de fixation (49) séparée de la première partie de fixation (48), qui comprend la seconde surface d'adhésif (16) comprenant le second adhésif (20).
